(19) Europäisches Patentamt

European Patent Office

Office européen des brevets

(11) **EP 0 759 543 A1**

(12) **EUROPEAN PATENT APPLICATION**
published in accordance with Art. 158(3) EPC

(43) Date of publication:
26.02.1997 Bulletin 1997/09

(21) Application number: 94905880.4

(22) Date of filing: 15.11.1994

(51) Int. Cl.$^6$: **G01J 5/60**

(86) International application number:
PCT/RU94/00255

(87) International publication number:
WO 95/18959 (13.07.1995 Gazette 1995/30)

(84) Designated Contracting States:
FR IT

(30) Priority: 10.01.1994 RU 94000898

(71) Applicants:
• **Mukhamediarov, Robert Davletovich**
**Kazan 420071 (RU)**
• **Kharisov, Rauil Ibragimovich**
**Kazan 420071 (RU)**

(72) Inventors:
• **Mukhamediarov, Robert Davletovich**
**Kazan 420071 (RU)**
• **Kharisov, Rauil Ibragimovich**
**Kazan 420071 (RU)**

(74) Representative: **Weissfloh, Ingo**
**Prellerstrasse 26**
**01309 Dresden (DE)**

(54) **METHOD OF MEASURING TEMPERATURE**

(57) A method is proposed of measuring the temperature (T) of objects with unknown radiating capacity on the basis of their own radiation. The method involves the following steps: gathering and focusing of the radiation; selection of N spectral bands, conversion of the radiation in every i-th spectral band into an electrical signal, and amplification thereof; introduction of two pairs of linear combinations of the signals obtained from N spectral bands, and calculation of a ratio. The parameters of the linear combinations are selected so as to ensure that the ratio: first linear combination / second linear combination is equal to the absolute value of the measured temperature.

Fig. 2.

**Description**

THE FIELD OF THE INVENTION

This invention relates to pyrometry and can be used to measure temperature.

BACKGROUND OF THE INVENTION

Temperature measuring method realized in a pyrometer of partial radiation with a drifting spectral range (inventor's certificate No.1672235, Cl. G01j5/16, 23.08.91) which principle of operation is to organize working spectral ranges by means of spectrodividers and detectors as well as to decrease detector's contribution into an output signal of a pyrometer (if their electric signals are out of its linear section) is well known. It allows to provide piecewise-nonlinear temperature approximation of a pyrometer output signal.

Disadvantages of the temperature measuring method are difficulties of its realization and nonlinear dependence of an output signal on temperature.

A method for measuring temperature and emissivity of a thermoradiating object ( with $V$ volume) in two given shortwave ranges $\lambda_1 \leq \lambda \leq \lambda_2$ and $\lambda_3 \leq \lambda \leq \lambda_4$ is known (EP, No. 0 384 682, Cl. G01j5/60, 29. 08. 90). This method consists in measuring the radiating-object energy $\Delta E_{12}$ in the first range $\lambda_1 \leq \lambda \leq \lambda_2$ that gives the first differential $R_{12} = \Delta E_{12}/(\lambda_2 - \lambda_1)V$ ,in measuring energy $\Delta E_{34}$ radiated by an object in the second wavelength range $\lambda_3 \leq \lambda \leq \lambda_4$ that gives the second differential $R_{34} = \Delta E_{34}/(\lambda_4 - \lambda_3)V$, in finding the logarithms $\log_b (R_{12})$ and $\log_b (R_{34})$ as linear combinations of variables $\log 137$ and $1/T$ where coefficients of these variables are known and in finding $\log 137$ and $1/T$ from the said linear combinations.

A disadvantage of the being considered temperature measuring method is the difficulty of logarithm calculations.

The nearest method is the colour-temperature measuring method realized in colour pyrometers "Spectropyr"(V.G.Kharasov. Automatization of High-Temperature Processes. Moscow, Energy Publishing House, 1974, p.25). This method comprises collection and focusing the radiation, separation of two spectral ranges, conversion of radiation into electric signals in each spectral range, their amplification and ratio formation. Limit of temperature measuring and regulation is 1300-1700 °C. Main error is 1% of the upper limit.

Disadvantages of the said temperature measuring method are low accuracy and small range of temperatures to be measured.

SUMMARY OF THE INVENTION

The present invention is directed to improve temperature measuring accuracy for objects with unknown emissivity and to extend the range of temperatures to be measured.

The aforesaid aim is accomplished by using the method for temperature measuring of objects with unknown emissivsty by their own radiation comprising radiation collection and focusing, separation of $N$ spectral ranges, radiation conversion into electric signals $E_i$ in each $i$th spectral range, their amplification and ratio formation is characterized in that two signal linear combinations of $N$ spectral ranges

$$\sum_{i=1}^{N} k_{1i} E_i \text{ and } \sum_{i=1}^{N} k_{2i} E_i$$

are introduced before the ratio formation in an electronic track thereby parameters of linear combinations $k_{1i}$ and $k_{2i}$ are matched from the condition of the

$$\text{first linear combination } \sum_{i=1}^{N} k_{1i} E_i \text{ / second linear combination } \sum_{i=1}^{N} k_{2i} E_i$$

ratio equality to the absolute value of temperature to be measured:

$$\frac{E_1 + k_{12}E_2 + ... + k_{1i}E_i + ... k_{1N}E_N}{k_{21}E_1 + k_{22}E_2 + ... + k_{2i}E_i + ... k_{2N}E_N} = T. \tag{1}$$

## BRIEF DESCRIPTION OF THE DRAWINGS

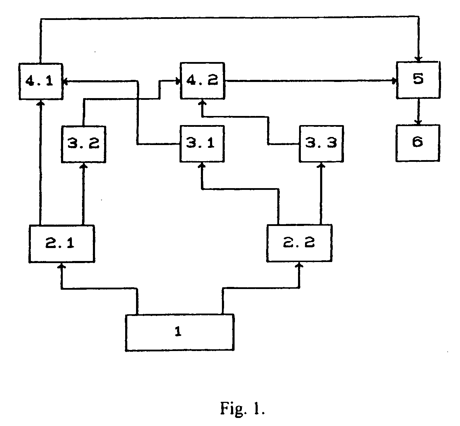

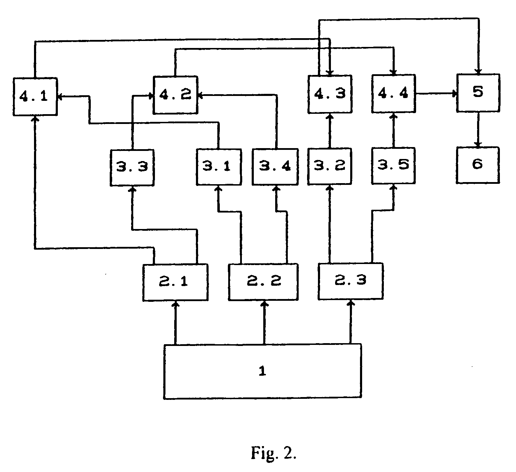

Figs. 1, 2 are circuits of realizing the suggested temperature measuring methods with $N=2$ and $N=3$ respectively.

The circuit of realizing the first temperature measuring method (Fig. 1) comprises a receiving optical system *1* forming optical spectral channels, two photodetectors with demodulators *2.1*, *2.2* forming two channels, three multipliers by constant *3.1*; *3.2*; *3.3*, two summers *4.1*; *4.2*, divider 5 the output of which is connected to indicator *6* thereby the first output of the first photodetector *2.1* and the first output of the second photodetector *2.2* are connected to inputs of the first summer *4.1* via the first multiplier by constant *3.1*; the second output of the first photodetector *2.1* and that of the second photodetector *2.2* are connected to inputs of the second summer *4.2* (through the second multiplier by constant *3.2* and the third multiplier by constant *3.3* respectively) the output of which is connected to the second input of divider *5* the first input of which is connected to the output of the first summer *4.1*.

The circuit of realizing the second embodiment of the temperature measuring method (Fig. 2) comprises a receiving optical system *1* forming optical spectral channels, three photodetectors with demodulators *2.1*; *2.2*; *2.3* forming three channels, five multipliers by constant *3.1*; *3.2*; *3.3*; *3.4*; *3.5*, four summers *4.1*; *4.2*; *4.3*; *4.4*, divider *5* the output of which is connected to indicator 6 thereby the first output of the first photodetector *2.1* and that of the second photodetector *2.2* are connected to inputs of the first summer *4.1* via the first multiplier by constant *3.1*; the second output of the first photodetector *2.1* and that of the second photodetector *2.2* are connected to inputs of the second summer *4.2* (via the third multiplier by constant *3.3* and the fourth multiplier by constant *3.4* respectively) the output of which and the second output of the third photodetector with demodulator *2.3* are connected to inputs of the fourth summer *4.4* (via the fifth multiplier by constant *3.5*) the output of which is connected to the second input of divider *5*; the output of the first summer *4.1* and the first output of the third photodetector with demodulator *2.3* are connected to inputs of the third summer *4.3* (through the second multiplier by constant *3.2*) the output of which is connected to the first input of divider *5*.

## PREFERRED EMBODIMENT OF THE INVENTION

The suggested temperature measuring method comprises radiation collection and focusing, separation of $N$ spectral ranges, conversion of radiation into electric signals in each $i$th spectral range. In a general case, an electric signal $E$ of detector is determined by Eq. (A.A.Poskachey, E.P.Chubarov. Optico-electronic temperature measuring systems. Moscow, Energoizdat Publishing House, 1988, pp. 22-29):

$$E = AS_{\lambda max} \int_0^\infty b_{\lambda T} a_\lambda d\lambda$$

where $A$ = coefficient characterizing the optical system;
$S_{\lambda max}$ = maximum spectral response;
$a_\lambda$ = relative response of detector;
$b_{\lambda T}$ = spectral distribution of radiation energy density:
$b_{\lambda T} = \varepsilon_{\lambda T} c_1 \lambda^{-5}(\exp(c_2/(\lambda T))-1)^{-1}$;
$\varepsilon_{\lambda T}$ = object emissivity;
$c_1 = 3.7413 \cdot 10^{-12}$ W $\cdot$ cm$^2$; $c_2 = 1.4388$ cm $\cdot$ K,
$\lambda$ = radiation wavelength, $\mu$m; $T$ = temperature, K.

Really, a wavelength changes in definite limits therefore an electric signal of the $i$th detector is determined by Eq.:

$$E_i = AS_{\lambda max i} \int_{\lambda i_1}^{\lambda i_2} \varepsilon_{\lambda T} c_1 \lambda^{-5}(\exp(c_2/(\lambda T))-1)^{-1} a_{\lambda i} d\lambda.$$

According to the first embodiment, a signal from the first detector *2.1* comes to the first summer *4.1* and the second multiplier by constant *3.2*; a signal from the second detector *2.2* comes to the first summer *4.1* (via the first multiplier by constant *3.1*) and to the second summer *4.2* (via the third multiplier by constant *3.3*) at which a signal from the second multiplier by constant *3.2* comes too. Further, signals from the first summer *4.1* and the second one *4.2* come to divider *5*.

In blocks *3.1-5* an algorithm is realized according to the formula:

$$\frac{E_1 + k_{12} E_2}{k_{21} E_1 + k_{22} E_2} = U \tag{2}$$

where $U$ = signal at output of divider 5; $k_{12}$, $k_{21}$, $k_{22}$ = coefficients of multipliers 3.1; 3.2; 3.3 respectively. Coefficients $k_{12}$, $k_{21}$, $k_{22}$ are calculated from the condition of integral minimum

$$I = \int_{T_1}^{T_2} (U - T)^2 \, dT$$

where $T_1$, $T_2$ = lower and upper limits of being measured temperatures. For parameters $\lambda_{11} = 1.0 \, \mu m$, $\lambda_{12} = 1.5 \, \mu m$, $\lambda_{21} = 1.5 \, \mu m$, $\lambda_{22} = 2.0 \, \mu m$, $T_1 = 1500$, $T_2 = 2000$, $\Delta T = T_2 - T_1 = 500$ ($\Delta T$ is the range of temperatures to be measured),

$$a_{\lambda 1} = -2.476191 \lambda^2 + 6.390476 \lambda - 3.114286,$$

$$a_{\lambda 2} = 13.81593 \lambda^3 - 73.89913 \lambda^2 + 130.7708 \lambda - 75.63159,$$

calculations give the following values of coefficients $k_{12}$, $k_{21}$, $k_{22}$ and output function $U$ (for convenience of realizing the method, the value of signal $U$ is further taken as one thousandth of the being measured temperature $T$): $k_{12} = 0.717$, $k_{21} = -0.053$, $k_{22} = 0.930$.

| T | U | T | U | T | U | T | U |
|---|---|---|---|---|---|---|---|
| 1500 | 1.50107 | 1505 | 1.50597 | 1510 | 1.51088 | 1515 | 1.51579 |
| 1520 | 1.52071 | 1525 | 1.52563 | 1530 | 1.53056 | 1535 | 1.53548 |
| 1540 | 1.54042 | 1545 | 1.54535 | 1550 | 1.55029 | 1555 | 1.55524 |
| 1560 | 1.56018 | 1565 | 1.56514 | 1570 | 1.57009 | 1575 | 1.57505 |
| 1580 | 1.58001 | 1585 | 1.58497 | 1590 | 1.58994 | 1595 | 1.59490 |
| 1600 | 1.59988 | 1605 | 1.60485 | 1610 | 1.60983 | 1615 | 1.61481 |
| 1620 | 1.61979 | 1625 | 1.62477 | 1630 | 1.62976 | 1635 | 1.63474 |
| 1640 | 1.63973 | 1645 | 1.64473 | 1650 | 1.64972 | 1655 | 1.65472 |
| 1660 | 1.65971 | 1665 | 1.66471 | 1670 | 1.66971 | 1675 | 1.67472 |
| 1680 | 1.67972 | 1685 | 1.68472 | 1690 | 1.68973 | 1695 | 1.69474 |
| 1700 | 1.69975 | 1705 | 1.70475 | 1710 | 1.70976 | 1715 | 1.71478 |
| 1720 | 1.71979 | 1725 | 1.72480 | 1730 | 1.72981 | 1735 | 1.73483 |
| 1740 | 1.73984 | 1745 | 1.74486 | 1750 | 1.74987 | 1755 | 1.75489 |
| 1760 | 1.75990 | 1765 | 1.76492 | 1770 | 1.76993 | 1775 | 1.77495 |
| 1780 | 1.77996 | 1785 | 1.78498 | 1790 | 1.79000 | 1795 | 1.79501 |
| 1800 | 1.80003 | 1805 | 1.80504 | 1810 | 1.81005 | 1815 | 1.81507 |
| 1820 | 1.82008 | 1825 | 1.82509 | 1830 | 1.83010 | 1835 | 1.83512 |
| 1840 | 1.84013 | 1845 | 1.84514 | 1850 | 1.85014 | 1855 | 1.85515 |
| 1860 | 1.86016 | 1865 | 1.86516 | 1870 | 1.87017 | 1875 | 1.87517 |
| 1880 | 1.88017 | 1885 | 1.88517 | 1890 | 1.89017 | 1895 | 1.89517 |
| 1900 | 1.90016 | 1905 | 1.90516 | 1910 | 1.91015 | 1915 | 1.91514 |
| 1920 | 1.92013 | 1925 | 1.92512 | 1930 | 1.93011 | 1935 | 1.93509 |
| 1940 | 1.94007 | 1945 | 1.94505 | 1950 | 1.95003 | 1955 | 1.95501 |
| 1960 | 1.95998 | 1965 | 1.96495 | 1970 | 1.96992 | 1975 | 1.97489 |
| 1980 | 1.97986 | 1985 | 1.98482 | 1990 | 1.98978 | 1995 | 1.99474 |
| 2000 | 1.99970 | | | | | | |

The method realized by algorithm (2) with the choice of two spectral zones of being received radiation $\Delta\lambda_1 = \lambda_{12} - \lambda_{11} = 1.5 - 1 = 0.5$ μm and $\Delta\lambda_2 = \lambda_{22} - \lambda_{21} = 2 - 1.5 = 0.5$ μm allows to measure color temperature and brightness one (the latter in decreasing $\Delta\lambda_1$ and $\Delta\lambda_2$). By varying the choice of parameters $k_{12}$, $k_{21}$, $k_{22}$ in an electronic track and that of spectral ranges $\Delta\lambda_1$, $\Delta\lambda_2$, indicator readings can be graduated by reference radiation sources (both colour and brightness ones dependent on practical usage). Thus, the suggested method significantly extends functions of pyrometry. Usage of wavelengths in the range of 1 μm to 2 μm permits to measure high temperatures with great accuracy, for instance, in steel melting, hot rolling, electrometallurgy, etc.

At $\lambda_{11} = 9.8$ μm, $\lambda_{12} = 11.0$ μm, $\lambda_{21} = 11.2$ μm, $\lambda_{22} = 12.4$ μm, $T_1 = 200$, $T_2 = 400$,

$$a_{\lambda 1} = -1.041666\lambda^2 + 21.63333\lambda - 111.285,$$

$$a_{\lambda 2} = -1.270833\lambda^2 + 29.875\lambda - 174.5466,$$

calculations give the following values of coefficients $k_{12}$, $k_{21}$, $k_{22}$ and output function $U$:
$k_{12} = 2.052$, $k_{21} = -14.911$, $k_{22} = 27.292$;

| T | U | T | U | T | U | T | U |
|---|---|---|---|---|---|---|---|
| 200 | 0.20124 | 205 | 0.20602 | 210 | 0.21083 | 215 | 0.21566 |
| 220 | 0.22051 | 225 | 0.22537 | 230 | 0.23026 | 235 | 0.23516 |
| 240 | 0.24008 | 245 | 0.24501 | 250 | 0.24995 | 255 | 0.25491 |
| 260 | 0.25988 | 265 | 0.26485 | 270 | 0.26984 | 275 | 0.27483 |
| 280 | 0.27983 | 285 | 0.28484 | 290 | 0.28985 | 295 | 0.29486 |
| 300 | 0.29988 | 305 | 0.30490 | 310 | 0.30993 | 315 | 0.31495 |
| 320 | 0.31997 | 325 | 0.32500 | 330 | 0.33002 | 335 | 0.33504 |
| 340 | 0.34006 | 345 | 0.34507 | 350 | 0.35008 | 355 | 0.35509 |
| 360 | 0.36009 | 365 | 0.36508 | 370 | 0.37007 | 375 | 0.37505 |
| 380 | 0.38003 | 385 | 0.38500 | 390 | 0.38995 | 395 | 0.39490 |
| 400 | 0.39985 | | | | | | |

The method realized by algorithm (2) with the choice of two spectral zones of being received regions radiation $\Delta\lambda_1 = \lambda_{12} - \lambda_{11} = 11 - 9.8 = 1.2$ µm, $\Delta\lambda_2 = \lambda_{22} - \lambda_{21} = 12.4 - 11.2 = 1.2$ µm allows to measure radiation temperature of weakly heated bodies.

In accordance with the second embodiment, a signal from the first detector *2.1* comes to the first summer *4.1* and the third multiplier by constant *3.3*; a signal from the second detector *2.2* comes to the first summer *4.1* (through the first multiplier by constant *3.1*) and to the second summer *4.2* (through the fourth multiplier by constant *3.4*) at which a signal from the third multiplier by constant *3.3* comes too; a signal from the third detector 2.3 comes to the second multiplier by constant *3.2* and the fifth one *3.5*; signals from the output of the first summer *4.1* and after the second multiplier by constant *3.2* come to inputs of third summer *4.3*; signals from the output of the second summer *4.2* and after the fifth multiplier by constant *3.5* come to inputs of the fourth summer *4.4*. Then signals from the third summer *4.3* and the fourth summer *4.4* come to divider *5*. In blocks *3.1-5*, an algorithm is realized according to the formula:

$$\frac{E_1 + k_{12}E_2 + k_{13}E_3}{k_{21}E_1 + k_{22}E_2 + k_{23}E_3} = U \qquad (3)$$

where $k_{12}$, $k_{13}$, $k_{21}$, $k_{22}$, $k_{23}$ = coefficients of multipliers *3.1*, *3.2*, *3.3*, *3.4*, *3.5* respectively. For parameters $\lambda_{11}$=1.0 µm, $\lambda_{12}$= 1.5 µm, $\lambda_{21}$= 1.5 µm, $\lambda_{22}$= 2.0 µm, $\lambda_{31}$= 2.0 µm, $\lambda_{32}$= 2.5 µm, $T_1$ = 1200, $T_2$ = 2200,

$$a_{\lambda 1} = -2.476191\lambda^2 + 6.390476\lambda - 3.114286,$$

$$a_{\lambda 2} = 13.81593\lambda^3 - 73.89913\lambda^2 + 130.7708\lambda - 75.63159,$$

$$a_{\lambda 3} = -1.715177\lambda^2 + 7.968295\lambda - 8.25089,$$

calculations give the following values of coefficients $k_{12}$, $k_{13}$, $k_{21}$, $k_{22}$, $k_{23}$ and output function $U$:
$k_{12}$=7.118, $k_{13}$=2.943, $k_{21}$= -0.670, $k_{22}$=0.991, $k_{23}$=6.419;

| T | U | T | U | T | U | T | U |
|---|---|---|---|---|---|---|---|
| 1200 | 1.20008 | 1205 | 1.20507 | 1210 | 1.21006 | 1215 | 1.21505 |
| 1220 | 1.22004 | 1225 | 1.22504 | 1230 | 1.23003 | 1235 | 1.23503 |
| 1240 | 1.24002 | 1245 | 1.24502 | 1250 | 1.25001 | 1255 | 1.25501 |
| 1260 | 1.26000 | 1265 | 1.26500 | 1270 | 1.27000 | 1275 | 1.27499 |
| 1280 | 1.27999 | 1285 | 1.28499 | 1290 | 1.28999 | 1295 | 1.29499 |
| 1300 | 1.29999 | 1305 | 1.30498 | 1310 | 1.30998 | 1315 | 1.31498 |
| 1320 | 1.31998 | 1325 | 1.32498 | 1330 | 1.32998 | 1335 | 1.33498 |

| 1340 | 1.33998 | 1345 | 1.34498 | 1350 | 1.34998 | 1355 | 1.35498 |
| 1360 | 1.35998 | 1365 | 1.36498 | 1370 | 1.36998 | 1375 | 1.37498 |
| 1380 | 1.37998 | 1385 | 1.38498 | 1390 | 1.38999 | 1395 | 1.39499 |
| 1400 | 1.39999 | 1405 | 1.40499 | 1410 | 1.40999 | 1415 | 1.41499 |
| 1420 | 1.41999 | 1425 | 1.42499 | 1430 | 1.42999 | 1435 | 1.43499 |
| 1440 | 1.43999 | 1445 | 1.44499 | 1450 | 1.45000 | 1455 | 1.45500 |
| 1460 | 1.46000 | 1465 | 1.46500 | 1470 | 1.47000 | 1475 | 1.47500 |
| 1480 | 1.48000 | 1485 | 1.48500 | 1490 | 1.49000 | 1495 | 1.49500 |
| 1500 | 1.50000 | 1505 | 1.50500 | 1510 | 1.51000 | 1515 | 1.51500 |
| 1520 | 1.52000 | 1525 | 1.52500 | 1530 | 1.53001 | 1535 | 1.53501 |
| 1540 | 1.54001 | 1545 | 1.54501 | 1550 | 1.55001 | 1555 | 1.55501 |
| 1560 | 1.56001 | 1565 | 1.56501 | 1570 | 1.57001 | 1575 | 1.57501 |
| 1580 | 1.58001 | 1585 | 1.58501 | 1590 | 1.59001 | 1595 | 1.59501 |
| 1600 | 1.60001 | 1605 | 1.60501 | 1610 | 1.61001 | 1615 | 1.61501 |
| 1620 | 1.62001 | 1625 | 1.62501 | 1630 | 1.63001 | 1635 | 1.63501 |
| 1640 | 1.64001 | 1645 | 1.64501 | 1650 | 1.65001 | 1655 | 1.65501 |
| 1660 | 1.66001 | 1665 | 1.66501 | 1670 | 1.67001 | 1675 | 1.67500 |
| 1680 | 1.68000 | 1685 | 1.68500 | 1690 | 1.69000 | 1695 | 1.69500 |
| 1700 | 1.70000 | 1705 | 1.70500 | 1710 | 1.71000 | 1715 | 1.71500 |
| 1720 | 1.72000 | 1725 | 1.72500 | 1730 | 1.73000 | 1735 | 1.73500 |
| 1740 | 1.74000 | 1745 | 1.74500 | 1750 | 1.75000 | 1755 | 1.75500 |
| 1760 | 1.76000 | 1765 | 1.76500 | 1770 | 1.77000 | 1775 | 1.77500 |
| 1780 | 1.78000 | 1785 | 1.78500 | 1790 | 1.79000 | 1795 | 1.79500 |
| 1800 | 1.80000 | 1805 | 1.80500 | 1810 | 1.81000 | 1815 | 1.81500 |
| 1820 | 1.82000 | 1825 | 1.82500 | 1830 | 1.83000 | 1835 | 1.83500 |
| 1840 | 1.84000 | 1845 | 1.84500 | 1850 | 1.85000 | 1855 | 1.85500 |
| 1860 | 1.86000 | 1865 | 1.86500 | 1870 | 1.87000 | 1875 | 1.87500 |
| 1880 | 1.88000 | 1885 | 1.88500 | 1890 | 1.89000 | 1895 | 1.89500 |
| 1900 | 1.90000 | 1905 | 1.90500 | 1910 | 1.91000 | 1915 | 1.91500 |
| 1920 | 1.92000 | 1925 | 1.92500 | 1930 | 1.93000 | 1935 | 1.93500 |
| 1940 | 1.94000 | 1945 | 1.94500 | 1950 | 1.95000 | 1955 | 1.95500 |
| 1960 | 1.96000 | 1965 | 1.96500 | 1970 | 1.97000 | 1975 | 1.97500 |
| 1980 | 1.98000 | 1985 | 1.98500 | 1990 | 1.99000 | 1995 | 1.99500 |
| 2000 | 2.00000 | 2005 | 2.00500 | 2010 | 2.01000 | 2015 | 2.01500 |
| 2020 | 2.02000 | 2025 | 2.02500 | 2030 | 2.03000 | 2035 | 2.03500 |
| 2040 | 2.04000 | 2045 | 2.04500 | 2050 | 2.05000 | 2055 | 2.05500 |
| 2060 | 2.06000 | 2065 | 2.06500 | 2070 | 2.07000 | 2075 | 2.07500 |
| 2080 | 2.08000 | 2085 | 2.08500 | 2090 | 2.09000 | 2095 | 2.09500 |
| 2100 | 2.10000 | 2105 | 2.10500 | 2110 | 2.11000 | 2115 | 2.11500 |
| 2120 | 2.12000 | 2125 | 2.12500 | 2130 | 2.13000 | 2135 | 2.13500 |
| 2140 | 2.14000 | 2145 | 2.14500 | 2150 | 2.15000 | 2155 | 2.15500 |
| 2160 | 2.16000 | 2165 | 2.16500 | 2170 | 2.17000 | 2175 | 2.17500 |
| 2180 | 2.18000 | 2185 | 2.18500 | 2190 | 2.18999 | 2195 | 2.19499 |
| 2200 | 2.19999 | | | | | | |

The method realized by algorithm (3) being a special case of algorithm (1) for three spectral regions $\Delta\lambda_1 = \lambda_{12} - \lambda_{11}$ =1.5 - 1 = 0.5 µm, $\Delta\lambda_2 = \lambda_{22} - \lambda_{21}$ = 2.0 - 1.5 = 0.5 µm, $\Delta\lambda_3 = \lambda_{12} - \lambda_{11}$ = 1.5 - 1.0 = 0.5 µm allows to measure colour temperature and brightness one (the latter in decreasing the transmission bands of a filter); in this case, the range of being measured temperatures extends by a factor of two and measurement accuracy increases by a factor of 5 (as minimum) compared with the two-spectral embodiment.

At $\lambda_{11}$=7.4 μm, $\lambda_{12}$= 8.6 μm, $\lambda_{21}$= 9.8 μm, $\lambda_{22}$= 11.0 μm, $\lambda_{31}$= 11.2 μm, $\lambda_{32}$= 12.4 μm, $T_1$ = 200, $T_2$ = 1200,

$$a_{\lambda 1} = 0.4722213\lambda^3 - 11.94447\lambda^2 + 100.0744\lambda - 276.9492,$$

$$a_{\lambda 2} = -1.041666\lambda^2 + 21.63333\lambda - 111.285,$$

$$a_{\lambda 3} = -1.270833\lambda^2 + 29.875\lambda - 174.5466,$$

calculations give the following values of coefficients $k_{12}$, $k_{13}$, $k_{21}$, $k_{22}$, $k_{23}$ and output function $U$:
$k_{12}$ = -3.778, $k_{13}$ = -5.980, $k_{21}$ = -0.013, $k_{22}$ =51.011, $k_{23}$ = -87.806;

| T | U | T | U | T | U | T | U |
|---|---|---|---|---|---|---|---|
| 200 | 0.20105 | 205 | 0.20592 | 210 | 0.21081 | 215 | 0.21570 |
| 220 | 0.22061 | 225 | 0.22552 | 230 | 0.23045 | 235 | 0.23538 |
| 240 | 0.24032 | 245 | 0.24526 | 250 | 0.25022 | 255 | 0.25517 |
| 260 | 0.26013 | 265 | 0.26510 | 270 | 0.27007 | 275 | 0.27505 |
| 280 | 0.28002 | 285 | 0.28501 | 290 | 0.28999 | 295 | 0.29497 |
| 300 | 0.29996 | 305 | 0.30495 | 310 | 0.30995 | 315 | 0.31494 |
| 320 | 0.31994 | 325 | 0.32493 | 330 | 0.32993 | 335 | 0.33493 |
| 340 | 0.33993 | 345 | 0.34493 | 350 | 0.34993 | 355 | 0.35493 |
| 360 | 0.35994 | 365 | 0.36494 | 370 | 0.36994 | 375 | 0.37495 |
| 380 | 0.37995 | 385 | 0.38495 | 390 | 0.38996 | 395 | 0.39496 |
| 400 | 0.39996 | 405 | 0.40497 | 410 | 0.40997 | 415 | 0.41498 |
| 420 | 0.41998 | 425 | 0.42498 | 430 | 0.42999 | 435 | 0.43499 |
| 440 | 0.43999 | 445 | 0.44500 | 450 | 0.45000 | 455 | 0.45500 |
| 460 | 0.46000 | 465 | 0.46501 | 470 | 0.47001 | 475 | 0.47501 |
| 480 | 0.48001 | 485 | 0.48501 | 490 | 0.49002 | 495 | 0.49502 |
| 500 | 0.50002 | 505 | 0.50502 | 510 | 0.51002 | 515 | 0.51502 |
| 520 | 0.52002 | 525 | 0.52502 | 530 | 0.53002 | 535 | 0.53502 |
| 540 | 0.54002 | 545 | 0.54502 | 550 | 0.55002 | 555 | 0.55502 |
| 560 | 0.56002 | 565 | 0.56502 | 570 | 0.57002 | 575 | 0.57502 |
| 580 | 0.58002 | 585 | 0.58502 | 590 | 0.59002 | 595 | 0.59502 |
| 600 | 0.60002 | 605 | 0.60502 | 610 | 0.61001 | 615 | 0.61501 |
| 620 | 0.62001 | 625 | 0.62501 | 630 | 0.63001 | 635 | 0.63501 |
| 640 | 0.64001 | 645 | 0.64501 | 650 | 0.65001 | 655 | 0.65500 |
| 660 | 0.66000 | 665 | 0.66500 | 670 | 0.67000 | 675 | 0.67500 |
| 680 | 0.68000 | 685 | 0.68500 | 690 | 0.69000 | 695 | 0.69500 |
| 700 | 0.70000 | 705 | 0.70500 | 710 | 0.70999 | 715 | 0.71499 |
| 720 | 0.71999 | 725 | 0.72499 | 730 | 0.72999 | 735 | 0.73499 |
| 740 | 0.73999 | 745 | 0.74499 | 750 | 0.74999 | 755 | 0.75499 |
| 760 | 0.75999 | 765 | 0.76499 | 770 | 0.76999 | 775 | 0.77499 |
| 780 | 0.77999 | 785 | 0.78499 | 790 | 0.78999 | 795 | 0.79499 |
| 800 | 0.79999 | 805 | 0.80499 | 810 | 0.80999 | 815 | 0.81499 |

| | | | | | | | |
|---|---|---|---|---|---|---|---|
| 820 | 0.81999 | 825 | 0.82499 | 830 | 0.82999 | 835 | 0.83499 |
| 840 | 0.83999 | 845 | 0.84499 | 850 | 0.84999 | 855 | 0.85499 |
| 860 | 0.85999 | 865 | 0.86499 | 870 | 0.86999 | 875 | 0.87499 |
| 880 | 0.87999 | 885 | 0.88499 | 890 | 0.88999 | 895 | 0.89499 |
| 900 | 0.89999 | 905 | 0.90500 | 910 | 0.91000 | 915 | 0.91500 |
| 920 | 0.92000 | 925 | 0.92500 | 930 | 0.93000 | 935 | 0.93500 |
| 940 | 0.94000 | 945 | 0.94500 | 950 | 0.95000 | 955 | 0.95500 |
| 960 | 0.96000 | 965 | 0.96500 | 970 | 0.97000 | 975 | 0.97500 |
| 980 | 0.98001 | 985 | 0.98501 | 990 | 0.99001 | 995 | 0.99501 |
| 1000 | 1.00001 | 1005 | 1.00501 | 1010 | 1.01001 | 1015 | 1.01501 |
| 1020 | 1.02001 | 1025 | 1.02501 | 1030 | 1.03001 | 1035 | 1.03501 |
| 1040 | 1.04001 | 1045 | 1.04501 | 1050 | 1.05001 | 1055 | 1.05501 |
| 1060 | 1.06001 | 1065 | 1.06501 | 1070 | 1.07001 | 1075 | 1.07501 |
| 1080 | 1.08001 | 1085 | 1.08501 | 1090 | 1.09001 | 1095 | 1.09501 |
| 1100 | 1.10001 | 1105 | 1.10501 | 1110 | 1.11001 | 1115 | 1.11501 |
| 1120 | 1.12001 | 1125 | 1.12500 | 1130 | 1.13000 | 1135 | 1.13500 |
| 1140 | 1.14000 | 1145 | 1.14500 | 1150 | 1.15000 | 1155 | 1.15500 |
| 1160 | 1.16000 | 1165 | 1.16499 | 1170 | 1.16999 | 1175 | 1.17499 |
| 1180 | 1.17999 | 1185 | 1.18499 | 1190 | 1.18998 | 1195 | 1.19498 |
| 1200 | 1.19998 | | | | | | |

At $\lambda_{11}$= 7.4 μm, $\lambda_{12}$= 8.6 μm, $\lambda_{21}$= 9.8 μm, $\lambda_{22}$= 11.0 μm, $\lambda_{31}$= 11.2 μm, $\lambda_{32}$= 12.4 μm, $T_1$ = 1200, $T_2$ = 2200,

$$a_{\lambda 1} = 0.4722213\lambda^3 - 11.94447\lambda^2 + 100.0744\lambda - 276.9492,$$

$$a_{\lambda 2} = -1.041666\lambda^2 + 21.63333\lambda - 111.285,$$

$$a_{\lambda 3} = -1.270833\lambda^2 + 29.875\lambda - 174.5466,$$

calculations give the following values of coefficients $k_{12}$, $k_{13}$, $k_{21}$, $k_{22}$, $k_{23}$ and output function $U$:
$k_{12} = -3.369$, $k_{13} = -5.014$, $k_{21} = -0.895$, $k_{22} = 49.945$, $k_{23} = -81.498$;

| T | U | T | U | T | U | T | U |
|------|---------|------|---------|------|---------|------|---------|
| 1200 | 1.19999 | 1205 | 1.20500 | 1210 | 1.21000 | 1215 | 1.21500 |
| 1220 | 1.22000 | 1225 | 1.22500 | 1230 | 1.23000 | 1235 | 1.23500 |
| 1240 | 1.24000 | 1245 | 1.24500 | 1250 | 1.25000 | 1255 | 1.25500 |
| 1260 | 1.26000 | 1265 | 1.26500 | 1270 | 1.27000 | 1275 | 1.27500 |
| 1280 | 1.28000 | 1285 | 1.28500 | 1290 | 1.29000 | 1295 | 1.29500 |
| 1300 | 1.30000 | 1305 | 1.30500 | 1310 | 1.31000 | 1315 | 1.31500 |
| 1320 | 1.32000 | 1325 | 1.32500 | 1330 | 1.33000 | 1335 | 1.33500 |
| 1340 | 1.34000 | 1345 | 1.34500 | 1350 | 1.35000 | 1355 | 1.35500 |
| 1360 | 1.36000 | 1365 | 1.36500 | 1370 | 1.37000 | 1375 | 1.37500 |
| 1380 | 1.38000 | 1385 | 1.38500 | 1390 | 1.39000 | 1395 | 1.39500 |
| 1400 | 1.40000 | 1405 | 1.40500 | 1410 | 1.41000 | 1415 | 1.41500 |
| 1420 | 1.42000 | 1425 | 1.42500 | 1430 | 1.43000 | 1435 | 1.43500 |
| 1440 | 1.44000 | 1445 | 1.44500 | 1450 | 1.45000 | 1455 | 1.45500 |
| 1460 | 1.46000 | 1465 | 1.46500 | 1470 | 1.47000 | 1475 | 1.47500 |

```
1480  1.48000  1485  1.48500  1490  1.49000  1495  1.49500
1500  1.50000  1505  1.50500  1510  1.51000  1515  1.51500
1520  1.52000  1525  1.52500  1530  1.53000  1535  1.53500
1540  1.54000  1545  1.54500  1550  1.55000  1555  1.55500
1560  1.56000  1565  1.56500  1570  1.57000  1575  1.57500
1580  1.58000  1585  1.58500  1590  1.59000  1595  1.59500
1600  1.60000  1605  1.60500  1610  1.61000  1615  1.61500
1620  1.62000  1625  1.62500  1630  1.63000  1635  1.63500
1640  1.64000  1645  1.64500  1650  1.65000  1655  1.65500
1660  1.66000  1665  1.66500  1670  1.67000  1675  1.67500
1680  1.68000  1685  1.68500  1690  1.69000  1695  1.69500
1700  1.70000  1705  1.70500  1710  1.71000  1715  1.71500
1720  1.72000  1725  1.72500  1730  1.73000  1735  1.73500
1740  1.74000  1745  1.74500  1750  1.75000  1755  1.75500
1760  1.76000  1765  1.76500  1770  1.77000  1775  1.77500
1780  1.78000  1785  1.78500  1790  1.79000  1795  1.79500
1800  1.80000  1805  1.80500  1810  1.81000  1815  1.81500
1820  1.82000  1825  1.82500  1830  1.83000  1835  1.83500
1840  1.84000  1845  1.84500  1850  1.85000  1855  1.85500
1860  1.86000  1865  1.86500  1870  1.87000  1875  1.87500
1880  1.88000  1885  1.88500  1890  1.89000  1895  1.89500
1900  1.90000  1905  1.90500  1910  1.91000  1915  1.91500
1920  1.92000  1925  1.92500  1930  1.93000  1935  1.93500
1940  1.94000  1945  1.94500  1950  1.95000  1955  1.95500
1960  1.96000  1965  1.96500  1970  1.97000  1975  1.97500
1980  1.98000  1985  1.98500  1990  1.99000  1995  1.99500
2000  2.00000  2005  2.00500  2010  2.01000  2015  2.01500
2020  2.02000  2025  2.02500  2030  2.03000  2035  2.03500
2040  2.04000  2045  2.04500  2050  2.05000  2055  2.05500
2060  2.06000  2065  2.06500  2070  2.07000  2075  2.07500
2080  2.08000  2085  2.08500  2090  2.09000  2095  2.09500
2100  2.10000  2105  2.10500  2110  2.11000  2115  2.11500
2120  2.12000  2125  2.12500  2130  2.13000  2135  2.13500
2140  2.14000  2145  2.14500  2150  2.15000  2155  2.15500
2160  2.16000  2165  2.16500  2170  2.17000  2175  2.17500
2180  2.18000  2185  2.18500  2190  2.19000  2195  2.19500
2200  2.20000
```

Calculations show that the temperature measuring method using three wavelength ranges compared with that using two wavelength ranges allows to extend the range of temperatures to be measured by a factor of 2-5 and to improve measurement accuracy by a factor of 4-15.

Similarly, the temperature measuring method using four wavelength ranges can be considered according to algorithm (1) with $N=4$

$$\frac{E_1+k_{12}E_2+k_{13}E_3+k_{14}E_4}{k_{21}E_1+k_{22}E_2+k_{23}E_3+k_{24}E_4} = U .$$

The increase of spectral range number gives the corresponding increase of parameter ($k_{1i}$ and $k_{2i}$) number of linear combinations and the extension of functional opportunities of the suggested temperature measuring method.

Thus, realization of the said method permits to improve the accuracy and to extend the range of temperatures to be measured.

INDUSTRIAL USAGE

The temperature measuring method is suggested to use in metallurgy (metal melting and pouring), in medicine for controlling the course of diseases, in agriculture for noncontact controlling the temperature and rejecting ill animals as well as in any technical processes where continuous inspection of temperature changes is required.

The temperature measuring method is suggested to use for making thermal imagers-radiometers designed for remote sensing (in space and aviation carriers) as well as for obtaining thermal maps with high accuracy of radiation resolution and temperature reference in ground conditions.

**Claims**

1. The temperature measuring method comprising radiation collection and focusing, separation of $N$ spectral ranges, conversion of radiation to electric signals $E_i$ in each $i$th spectral range, their amplification and ratio formation is characterized in that such a couple of linear combinations of $N$ spectral range signals

$$\sum_{i=1}^{N} k_{1i} E_i \text{ and } \sum_{i=1}^{N} k_{2i} E_i$$

is introduced (before ratio formation in an electronic track) which parameters of linear combinations $k_{1i}$, $k_{2i}$ are matched from the condition of the

$$\text{first linear combination} \sum_{i=1}^{N} k_{1i} E_i / \text{second linear combination} \sum_{i=1}^{N} k_{2i} E_i$$

ratio equality to the absolute value of the being measured temperature

$$\frac{E_1 + k_{12} E_2 + ... + k_{1i} E_i + ... + k_{1N} E_N}{k_{21} E_1 + k_{22} E_2 + ... + k_{2i} E_i + ... + k_{2N} E_N} = T.$$

Fig. 1.

Fig. 2.

**INTERNATIONAL SEARCH REPORT**

| International application No. |
| --- |
| PCT/RU 94/00255 |

**A. CLASSIFICATION OF SUBJECT MATTER**

Int.CL.6  G01J  5/60

According to International Patent Classification (IPC) or to both national classification and IPC

**B. FIELDS SEARCHED**

Minimum documentation searched (classification system followed by classification symbols)

Int.Cl. 5  G01J  5/00, 5/10-5/16, 5/28, 5/50, 5/60

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | GB, A, 2179446 (VEB MESSGERATEWERK ERICH WEINERT MAGDEBURG), 4 March 1987 (04.03.87), the abstract<br>-.- | 1 |
| A | US, A, 4659234 (ALUMINIUM COMPANY OF AMERICA), 21 April 1987 (21.04.87), the abstract<br>-.- | |
| A | US, A, 4225230 (VANZETTI INFRARED & COMPUTER SYSTEMS INCORPORATED), 30 September 1980 (30.09.80), the abstract<br>-.- | 1 |
| A | US, A, 3795918 (CAPINTEC, INC), 5 March 1974 (05.03.74), the abstract<br>-.- | 1 |
| A | DE, A1, 3625239 (KERNFORSCHUNGSZENTRUM KARLSRUHE GMBH), 28 January 1988 (28.01.88) | 1 |

[X] Further documents are listed in the continuation of Box C.   [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance: the claimed invention cannot be considered novel or cannot be considered to involve an inventive step when the document is taken alone
"Y" document of particular relevance: the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 31 January 1995 (31.01.95) | 07 February 1995 (07.02.95) |

| Name and mailing address of the ISA/RU | Authorized officer |
| --- | --- |
| Facsimile No. | Telephone No. |

Form PCT/ISA/210 (second sheet) (July 1992)